# EUROPÄISCHE PATENTSCHRIFT

(11) **EP 2 296 928 B1**
(45) Veröffentlichungstag und Bekanntmachung des Hinweises auf die Patenterteilung: **06.08.2014**
(21) Anmeldenummer: 08803045.7
(22) Anmeldetag: 15.08.2008
(51) Int. Cl.: B60K 17/06, F16H 37/08, B60K 17/10, F16H 47/04

(54) **GETRIEBEVORRICHTUNG FÜR EIN FAHRZEUG MIT EINEM VARIATOR UND EINER PLANETENGETRIEBEEINRICHTUNG**
TRANSMISSION DEVICE FOR A VEHICLE, COMPRISING A VARIATOR AND A PLANETARY GEAR UNIT
DISPOSITIF D'ENGRENAGE POUR UN VÉHICULE COMPORTANT UN VARIATEUR ET UN ENGRENAGE PLANÉTAIRE

(30) Priorität: 16.07.2008 DE 102008040445
(43) Veröffentlichungstag der Anmeldung: 23.03.2011
(73) Patentinhaber: ZF Friedrichshafen AG, 88038 Friedrichshafen (DE)
(72) Erfinder: GRAD, Karl, 94161 Ruderting (DE); POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060753
(87) Internationale Veröffentlichungsnummer: WO 2010/006657

(56) Entgegenhaltungen:
- DE-A1- 1 952 966
- DE-A1- 4 223 296
- DE-A1-102006 025 348
- JP-A- 2002 235 831
- US-A- 3 371 734
- US-A- 4 471 669

## Beschreibung

Die Erfindung betrifft eine Getriebevorrichtung für ein Fahrzeug mit einem Variator, einer Planetengetriebeeinrichtung und einer Schaltgetriebeeinrichtung gemäß der im Oberbegriff des Patentanspruches 1 näher definierten Art.

Ein hydrostatisch-mechanisches Traktorengetriebe mit einem stufenlosen hydrostatischen Antrieb ist aus der DE 10 2006 025 348 A1, die den Oberbegriff des Anspruchs 1 bildet, bekannt. Der hydrostatische Antrieb weist eine von einem Verbrennungsmotor angetriebene hydrostatische Pumpe und einen von der Pumpe angetriebenen Hydromotor auf. Die Pumpe und der Hydromotor sind über ein einziges, gemeinsames Schwenkteil zwangsgekoppelt und derart verstellbar, dass die Pumpe zwischen einem minimalen Winkel und einem maximalen Winkel verschwenkbar ist, während zugleich der Motor synchron von einem maximalen Schwenkwinkel zu einem minimalen Winkel verschwenkt. Die Pumpe ist für eine einzige Förderrichtung des Volumenstroms ausgelegt. Ein mechanisches Bereichsgetriebe mit mehreren Schaltstufen, die über eine Kupplung schaltbar sind, ist nachgeschaltet.

Nachteilhafterweise ist der Variator aufgrund seiner Anbindung über Stirnradverzahnungen jeweils im Bereich des Getriebeeingangs vorgesehen und bei gleichzeitig gering zur Verfügung stehendem Bauraumbedarf im Wartungsfall nur mit erheblichem Aufwand zu demontieren.

In der US 3 371 734 A ist eine Lenkvorrichtung für Raupenfahrzeuge beschrieben. Ein Variator ist über Winkeltriebe an einer Planetengetriebeeinrichtung angebunden, jedoch steht eine der Wellen des Variators zusätzlich über eine Stirnradverzahnung und eine weitere Kegelradverzahnung mit der anderen Welle des Variators und darüber hinaus mit einer Welle einer weiteren Planetengetriebeeinrichtung in Wirkverbindung, womit die für eine beliebige Anordnung des Variators gegenüber der Planetengetriebeeinrichtung im vorhandenen Bauraum erforderlichen Freiheitsgrade nicht zur Verfügung stehen.

Darüber hinaus ist aus der DE 19 52 966 A eine Getriebevorrichtung mit Leistungsverzweigung bekannt, welche einen Variator, einen Doppelplanetenradsatz und eine Schaltgetriebeeinrichtung zur Darstellung mehrerer Fahrbereiche umfasst. Die Pumpen- und die Motoreinrichtung des als Hydrostateinrichtung ausgeführten Variators sind über ein gemeinsames Joch verstellbar.

Der vorliegenden Erfindung liegt die Aufgabe zugrunde, die aus dem Stand der Technik bekannten Getriebevorrichtungen derart weiterzubilden, dass der Variator in Bezug auf die Planetengetriebeeinrichtung und die Schaltgetriebeeinrichtung auf konstruktiv einfache und kostengünstige Art und Weise an den zur Verfügung stehenden Bauraum angepasst positionierbar ist und im Wartungsfall mit geringem Aufwand demontierbar ist.

Erfindungsgemäß wird diese Aufgabe mit einer Getriebevorrichtung gemäß den Merkmalen des Patentanspruches 1 gelöst.

Bei der Getriebevorrichtung nach der Erfindung für ein Fahrzeug mit einem Variator, einer Planetengetriebeeinrichtung und einer Schaltgetriebeeinrichtung ist der Variator im Bereich einer ersten Welle und im Bereich einer zweiten Welle mit der Planetengetriebeeinrichtung und der Schaltgetriebeeinrichtung wirkverbunden, wobei der Variator im Bereich seiner ersten Welle und im Bereich seiner zweiten Welle jeweils mit einer Welle der Planetengetriebeeinrichtung verbunden ist.

Erfindungsgemäß ist die erste Welle des Variators über einen Winkeltrieb nur mit einer der Wellen der Planetengetriebeeinrichtung und die zweite Welle des Variators über einen weiteren Winkeltrieb nur mit einer weiteren Welle der Planetengetriebeeinrichtung gekoppelt und der Variator zur Demontage von einer Steckverbindung und von Kegelradverzahnungen der Winkeltriebe abziehbar ausgeführt.

Der über die vorzugsweise durch Kegelradverzahnungen des Winkeltriebes mit der Planetengetriebeeinrichtung verbundene Variator ist in konstruktiv einfacher und kostengünstiger Art und Weise mit im Vergleich zu Stirnradverzahnungen mit kleineren Zahnrädern an den Leistungsfluss der Getriebevorrichtung anbindbar und in Bezug auf die Planetengetriebeeinrichtung und die Schaltgetriebeeinrichtung daher bauraumgünstig und in beliebiger Position anordenbar.

Zusätzlich ist der Variator im Servicefall während einer Demontage einfach aus der Verzahnung der mit den Wellen der Planetengetriebeeinrichtung verbundenen Kegelräder entnehmbar.

Bei einer vorteilhaften Weiterbildung der erfindungsgemäßen Getriebevorrichtung ist der Variator länger als breit und tief und in seiner Längserstreckung in Einbaulage im Fahrzeug wenigstens annähernd horizontal orientiert. Damit ist der Variator in Abhängigkeit seiner räumlichen Anordnung in Bezug auf die Planetengetriebeeinrichtung und die Schaltgetriebeeinrichtung auf einfache Art und Weise in Bezug auf eine Fahrzeugoberseite nach oben, in Bezug auf eine Fahrzeugunterseite nach unten, in Bezug auf eine Vorwärtsfahrtrichtung nach vorne, in Richtung einer Fahrzeughinterachse oder seitlich aus einer Steckverbindung und von den Variator mit weiteren Getriebekomponenten verbindenden Kegelradverzahnungen abziehbar und somit auf einfache Art und Weise bei gleichzeitig geringem Bauraumbedarf der Getriebevorrichtung demontierbar.

Bei einer hierzu alternativen Weiterbildung der Getriebevorrichtung nach der Erfindung ist der Variator länger als breit und tief ausgeführt und in seiner Längserstreckung in Einbaulage im Fahrzeug in Bezug auf eine Fahrzeughochachse wenigstens annähernd diagonal ausgerichtet, womit die Getriebevorrichtung nach der Erfindung in dem seitlich durch eine definierte Rahmenbauweise des Fahrzeuges sowie nach oben und nach unten durch Fahrzeugaufbauten und/oder eine gewünschte Bodenfreiheit begrenzt zur Verfügung stehenden Bauraum vollständig anordenbar ist, ohne bestehende Fahrzeugsysteme konstruktiv ändern zu müssen.

Bei einer wiederum alternativen weiteren Ausführungsform der erfindungsgemäßen Getriebevorrichtung ist der Variator länger als breit und tief ausgebildet und in seiner Längserstreckung in Einbaulage im Fahrzeug wenigstens annähernd vertikal ausgerichtet, womit aus stoßartigen Belastungen, die beispielsweise beim Überfahren von Fahrbahnunebenheiten, Schlaglöchern und dergleichen auftreten, resultierende und am Variator angreifende Stellkräfte, die ein unerwünschtes, selbstständiges Verstellen des Variators zumindest kurzzeitig auslösen können, reduziert bzw. vermieden sind, wobei dieser Vorteil besonders bei einer Ausführung des Variators als Hydrostateinrichtung in Schrägachsenbauweise mit gemeinsamer Verstellung der Pumpen- und Motoreinrichtung erreicht wird.

Um den Variator auf besonders einfache Art und Weise ausgehend von einer Fahrzeugunterseite demontieren zu können, ist der Variator bei einer vorteilhaften Weiterbildung der Getriebevorrichtung nach der Erfindung wenigstens bereichsweise unterhalb eines Ölstandes eines Ölsumpfes der Getriebes vorrichtung angeordnet, wobei der unterhalb des Ölstandes liegende Bereich durch Schotteinrichtungen vom Hydraulikfluid abgeschottet ist, um im Betrieb durch Ölplanschen der rotierenden Bauteile des Variators verursachte Verlustleistungen zu vermeiden.

Alternativ hierzu ist der Variator bei einer weiteren vorteilhaften Ausführungsform der Getriebevorrichtung nach der Erfindung zur Vermeidung von Planschverlusten oberhalb eines Ölstandes eines Ölsumpfes der Getriebevorrichtung angeordnet.

Weitere Ausführungsformen der Getriebevorrichtung nach der Erfindung sind jeweils mit einem als Hydrostateinrichtung ausgebildeten Variator in Schrägachsenbauweise oder in Schrägscheibenbauweise mit wenigstens einer Verstelleinheit ausgeführt, um möglichst viel Leistung bei gleichzeitig geringem Bauraumbedarf der Getriebevorrichtung von einer Antriebsmaschine des Fahrzeuges über die Getriebevorrichtung zu einem Abtrieb des Fahrzeuges führen zu können.

Eine kostengünstige und durch einen einfachen konstruktiven Aufbau gekennzeichnete Weiterbildung der Getriebevorrichtung nach der Erfindung ist mit einer wenigstens eine Konstanteinheit aufweisenden Hydrostateinrichtung ausgestaltet.

Über den Variator, die Planetengetriebeeinrichtung und die Schaltgetriebeeinrichtung darstellbare Übersetzungsbereiche, deren Übersetzungen jeweils stufenlos variierbar sind, sind bei einer weiteren Ausführungsform der Getriebevorrichtung nach der Erfindung, bei der die Hydrostateinrichtung wenigstens eine verstellbare Pumpeneinrichtung und mindestens eine verstellbare Motoreinrichtung aufweist, die unabhängig voneinander verstellbar ausgeführt sind, mit einer großen Spreizung zur Verfügung stellbar.

Bei einer hierzu alternativen Ausführungsform der Getriebevorrichtung nach der Erfindung weist die Hydrostateinrichtung wenigstens eine verstellbare Pumpeneinrichtung und mindestens eine verstellbare Motoreinrichtung auf, die gemeinsam verstellbar ausgeführt sind. Damit ist die Verstellung der Hydrostateinrichtung im Vergleich zur vorgenannten Ausführungsform der Getriebevorrichtung nach der Erfindung konstruktiv einfacher und kostengünstiger herstellbar.

Bei einer vorteilhaften Weiterbildung der Getriebevorrichtung nach der Erfindung ist der Variator in Einbaulage zwischen einer Antriebsmaschine des Fahrzeugs und der Planetengetriebeeinrichtung sowie der Schaltgetriebeeinrichtung angeordnet. Damit ist der Variator auf einfache Art und Weise durch Abziehen des Variators in Vorwärtsfahrtrichtung aus einem Fahrzeug ausbaubar, wenn seitlich keine Zugänglichkeit zum Getriebegehäuse besteht. Darüber hinaus ist der Variator auch einfach ausgehend von der Unterseite des Fahrzeuges bei entsprechender Zugänglichkeit ohne zusätzliches Demontieren von Fahrzeugteilen oder einem Kippen einer Fahrzeugkabine ausbaubar.

Bei in radialer Richtung jeweils einen geringen Bauraumbedarf aufweisenden Ausführungen der Getriebevorrichtung nach der Erfindung ist entweder der Variator zwischen dem Planetenradsatz und der Schaltgetriebeeinrichtung oder die Schaltgetriebeeinrichtung zwischen dem Planetenradsatz und dem Variator angeordnet.

Der Variator ist in Einbaulage in Bezug auf eine Fahrtrichtung des Fahrzeuges bei einer weiteren vorteilhaften und durch eine in axialer Richtung geringeren Bauraumbedarf gekennzeichneten Ausführungsform neben der Planetengetriebeeinrichtung und/oder der Schaltgetriebeeinrichtung angeordnet, wobei der Variator bei entsprechender Zugänglichkeit durch seitliches Abziehen aus einer Steckverbindung oder von den Variator mit weiteren Getriebekomponenten verbindenden Verzahnungen auf einfache Art und Weise entnehmbar ist.

Das Eintauchen drehender Bauteile des Variators in den Ölsumpf der erfindungsgemäßen Getriebevorrichtung ist bei einer durch einen geringen axialen Bauraumbedarf gekennzeichneten weiteren Ausführungsform der Getriebevorrichtung, bei der der Variator in Einbaulage und in Bezug auf eine Fahrzeughochachse räumlich oberhalb der Planetengetriebeeinrichtung und/oder der Schaltgetriebeeinrichtung angeordnet ist, vollständig vermieden, wobei diese Ausführungsform besonders bei zusätzlicher seitlicher Begrenzung des zur Verfügung stehenden Bauraums, beispielsweise durch eine definierte Rahmenbauweise des Fahrzeuges, besonders günstig ist. Zusätzlich besteht auf einfache Art und Weise die Möglichkeit, Ölströme eines als Hydrostateinheit ausgeführten Variators, beispielsweise Leckagen, Spülöl oder dergleichen, zur Schmierung von Getriebekomponenten der Getriebevorrichtung, die unterhalb des Variators angeordnet sind, zu verwenden. Darüber hinaus ist der Variator bei entsprechender Anordnung der Getriebevorrichtung nach der Erfindung durch Kippen der Fahrerkabine des mit der erfindungsgemäßen Getriebevorrichtung ausgeführten Fahrzeuges zu Servicezwecken im Bezug auf die Fahrzeughochachse einfach nach oben entnehmbar.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: ein Räderschema eines ersten Ausführungsbeispieles der erfindungsgemäßen Getriebevorrichtung;
- Fig. 2: eine schematisierte dreidimensionale Seitenansicht einer ersten Variante einer Getriebevorrichtung gemäß Fig. 1;
- Fig. 3: eine schematisierte dreidimensionale Seitenansicht einer zweiten Variante der Getriebevorrichtung gemäß Fig. 1;
- Fig. 4: eine Fig. 2 und Fig. 3 entsprechende Darstellung einer dritten Variante der Getriebevorrichtung gemäß Fig. 1;
- Fig. 5: eine Fig. 2 entsprechende Darstellung einer vierten Variante der Getriebevorrichtung gemäß Fig. 1;
- Fig. 6: eine Fig. 2 entsprechende Darstellung einer fünften Variante der Getriebevorrichtung gemäß Fig. 1;
- Fig. 7: eine ebenfalls Fig. 2 entsprechende Darstellung einer sechsten Variante der Getriebevorrichtung gemäß Fig. 1;
- Fig. 8: ein Räderschema eines zweiten Ausführungsbeispieles der Getriebevorrichtung nach der Erfindung; und
- Fig. 9: ein Räderschema eines dritten Ausführungsbeispieles der Getriebevorrichtung nach der Erfindung.

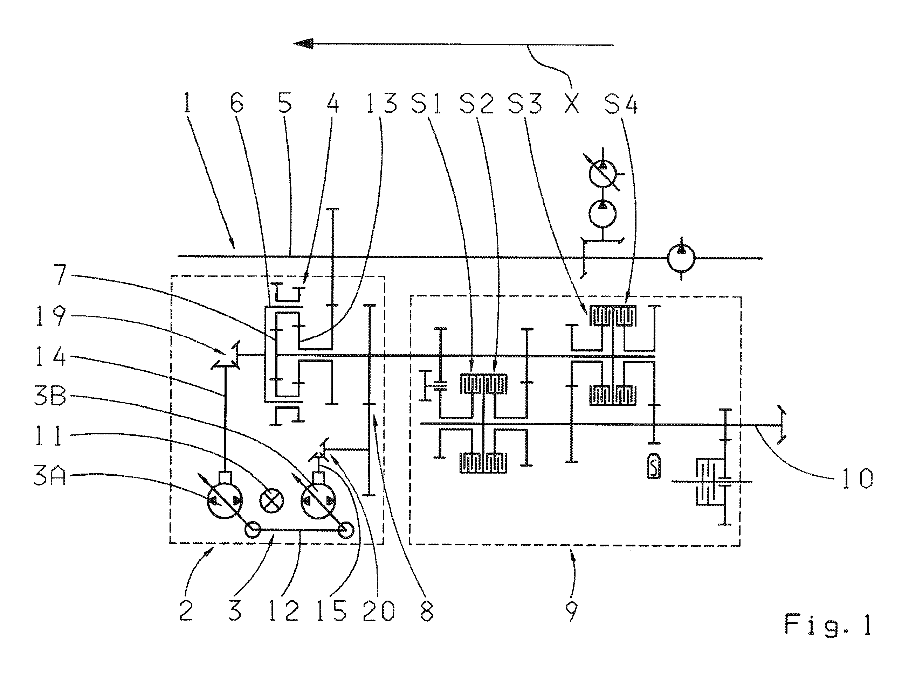

Fig. 1 zeigt ein Räderschema einer Getriebevorrichtung 1 mit stufenloser Übersetzungsverstellung, welches beispielsweise in landwirtschaftlichen Fahrzeugen einsetzbar ist. Über die Getriebevorrichtung 1 sind vorliegend drei Übersetzungsbereiche bzw. Fahrbereiche für Vorwärtsfahrt und ein Übersetzungsbereich für Rückwärtsfahrt darstellbar, innerhalb welchen die Übersetzung der Getriebevorrichtung stufenlos verstellbar ist.

Die stufenlose Verstellung der Getriebeübersetzung wird über einen stufenlosen Antriebssatz 2 ermöglicht, der einen Variator 3 und eine Planetengetriebeeinrichtung 4 umfasst. Mittels der Planetengetriebeeinrichtung 4 wird der nur begrenzt einstellbaren Drehzahl einer Getriebeantriebswelle 5, die mit einer Antriebsmaschine eines Fahrzeugs gekoppelt ist, die stufenlose Drehzahlverstellbarkeit des Variators 3 überlagert. Als Ergebnis dieser Überlagerung stehen im Bereich der Planetengetriebeeinrichtung 4 zwei Wellen 6, 7 der Planetengetriebeeinrichtung 4 mit stufenlos veränderbarer Drehzahl zur Verfügung, wobei die erste Welle 6 als Planetenträger der Planetengetriebeeinrichtung 4 ausgeführt ist und mit einer verstellbaren Pumpeneinrichtung 3A des Variators 3 gekoppelt ist. Die zweite Welle 7 ist ein Sonnenrad der Planetengetriebeeinrichtung 4, welche über eine Stirnradverzahnung 8 mit einer verstellbaren Motoreinrichtung 3B des Variators 3 in Wirkverbindung steht. Die Pumpeneinrichtung 3A und die Motoreinrichtung 3B des als Hydrostateinrichtung ausgeführten Variators 3 sind jeweils in Schrägachsenbauweise ausgebildet und im Bereich einer Schwenkachse 11 über ein gemeinsames Joch 12 verschwenkbar.

Der stufenlose Antriebssatz 2 ist mit einer Schaltgetriebeeinrichtung 9 gekoppelt, die in Abhängigkeit der Leistungsfähigkeit des Variators 5 und auch in Abhängigkeit der konstruktiven Ausgestaltung der Planetengetriebeeinrichtung 4 ausgebildet ist. Über die Schaltgetriebeeinrichtung 9 erfolgt die Leistungsübertragung vom stufenlosen Antriebssatz 2 in Richtung einer Getriebeabtriebswelle 10. Darüber hinaus werden im Bereich der Schaltgetriebeeinrichtung 9 die geforderten Abtriebsdrehzahlen in den verschiedenen Übersetzungsbereichen dargestellt.

Die Schaltgetriebeeinrichtung 9 ist mit vier reibschlüssigen Schaltelementen S1 bis S4 ausgestaltet, wobei bei geschlossenem ersten Schaltelement S1 der Fahrbereich für Rückwärtsfahrt in der Getriebevorrichtung 1 eingelegt ist. Die Schaltelemente S2 bis S4 sind zur Darstellung der drei Fahrbereiche für Vorwärtsfahrt vorgesehen.

Ein zweites Sonnenrad 13 der Planetengetriebeeinrichtung 4 ist mit der Getriebeantriebswelle 5 verbunden. Die Variatorwellen 14 und 15 sind somit jeweils an eine Welle 6, 7 der Planetengetriebeeinrichtung 4 gekoppelt, die keine direkte Verbindung mit der Getriebeantriebswelle 5 aufweisen. Die beiden Variatorwellen 14 und 15 sind jeweils über sogenannte Winkeltriebe 19 und 20 mit den Wellen 6 und 7 der Planetengetriebeeinrichtung 4 verbunden, wobei die Winkeltriebe 19, 20 jeweils durch miteinander kämmende Kegelräder bzw. Kegelradverzahnungen gebildet sind. Die Variatorwellen 14 und 15 sind rechtwinklig zu den Wellen 6 und 7 der Planetengetriebeeinrichtung 4 angeordnet.

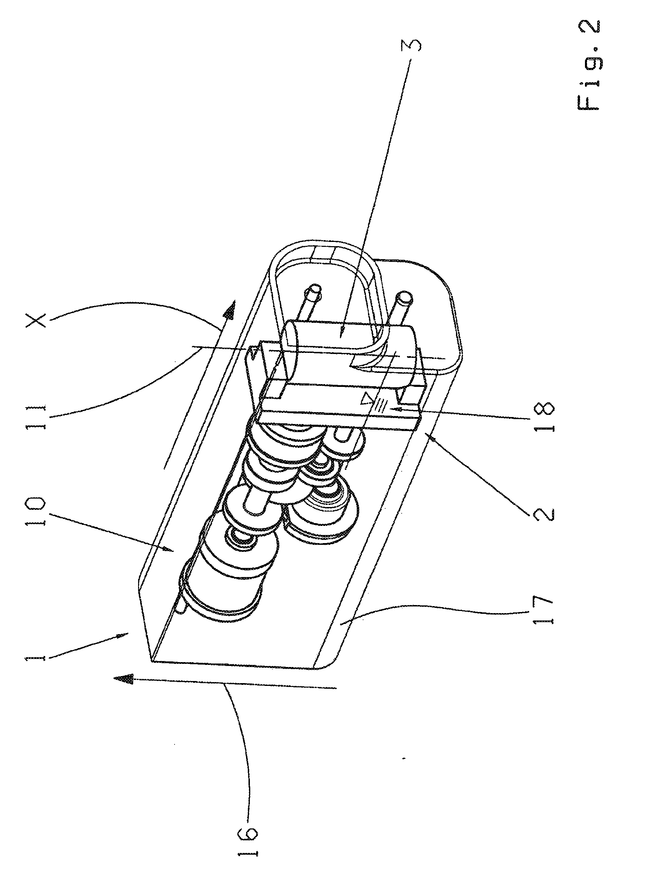

Die Anbindung des Variators 3 über die beiden Winkeltriebe 19 und 20 an die Planetengetriebeeinrichtung 4 bietet auf einfache Art und Weise die Möglichkeit, den Variator 3 jeweils in den in Fig. 2 bis Fig. 7 dargestellten Positionen mit geringem konstruktiven Aufwand und niedrigem Bauraumbedarf anzuordnen. Dabei ist der Variator 3 bei der in Fig. 2 dargestellten ersten Variante der Getriebevorrichtung 1 gemäß Fig. 1 länger als breit und tief aufgeführt und eine Orientierung einer Schwenkachse 11 des Variators 3 entspricht in der in Fig. 2 dargestellten Einbaulage im Fahrzeug wenigstens annähernd der Orientierung einer Fahrzeughochachse 16. Damit werden dem Variator 3 zumindest kurzzeitig selbstständig verstellende und am Joch 12 des Variators 3 angreifende Stellkräfte vermieden, die durch stoßartige Belastungen, die beispielsweise beim Überfahren von Fahrbahnunebenheiten, Schlaglöchern und dergleichen verursacht werden.

Dies resultiert aus der Tatsache, dass auf Grund der vertikalen Ausrichtung des Variators 3 die Wirkrichtung der betriebsbedingt am Variator 3 im Betrieb eines Fahrzeuges angreifenden Kräfte im Wesentlichen senkrecht zur Schwenkachse 11 des Variators 3 ausgerichtet ist und daher den Variator 3 bzw. dessen Pumpeneinrichtung 3A bzw. dessen Motoreinrichtung 3B nicht verstellen.

Zusätzlich ist der Variator 3 in Vorwärtsfahrtrichtung des Fahrzeuges, die durch den Pfeil X in Fig. 2 näher gekennzeichnet ist, vor der Planetengetriebeeinrichtung 4 und der Schaltgetriebeeinrichtung 9 angeordnet. Die Getriebevorrichtung 1 ist einerseits in radialer Richtung durch einen geringen Bauraumbedarf und andererseits durch eine größere axiale Länge gekennzeichnet. Zudem ist der Variator 3 aufgrund seiner in Vorwärtsfahrtrichtung X vorderen Anordnung einfach zu demontieren, wobei der Variator 3 in Abhängigkeit der jeweiligen Ausführung des Fahrzeuges in Bezug auf eine Fahrzeugvorderachse nach vorne, in Bezug auf eine Fahrzeugoberseite nach unten oder in Richtung der Fahrzeughochachse 16 nach oben aus einem Fahrzeugrahmen 17 entnehmbar ist, der neben weiteren Fahrzeugkomponenten den für die Getriebevorrichtung 1 zur Verfügung stehenden Bauraum im Fahrzeug begrenzt.

Ist der Variator 3 wie im vorliegenden Fall zumindest bereichsweise unterhalb eines Ölstandes 18 der Getriebevorrichtung 1 angeordnet, ist der Variator 3 durch geeignete Schotteinrichtungen von dem in einem nicht näher dargestellten Ölsumpf der Getriebevorrichtung 1 angeordneten Hydraulikfluid abzuschotten, um im Betrieb der Getriebevorrichtung 1 sogenannte Planschverluste und somit eine Beeinträchtigung des Gesamtwirkungsgrades der Getriebevorrichtung 1 auf einfache Art und Weise zu vermeiden.

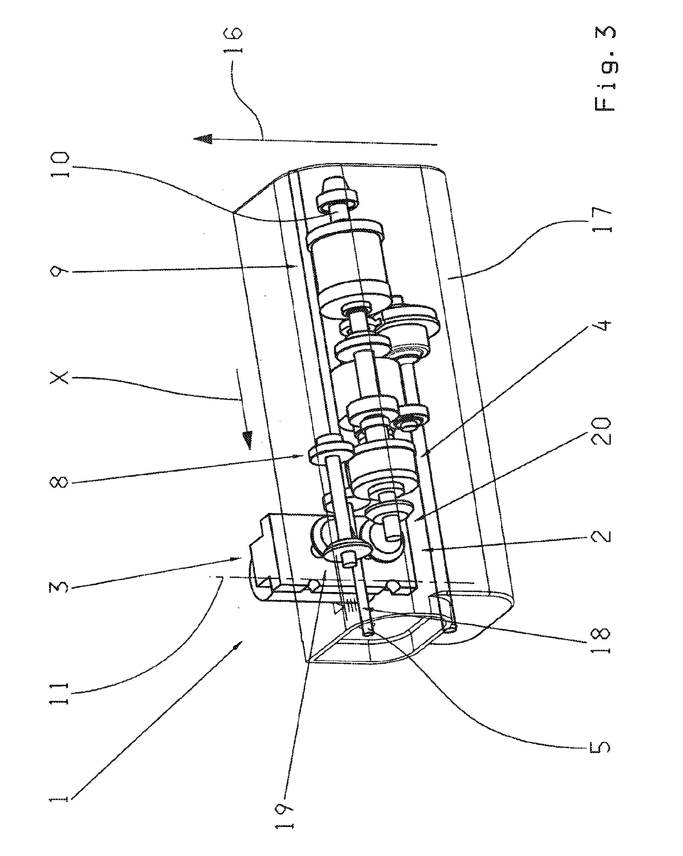

Die Anbindung des Variators 3 über die beiden Winkeltriebe 19 und 20 an die Planetengetriebeeinrichtung 4 bietet auf einfache Art und Weise die Möglichkeit, den Variator 3 in der in Fig. 3 dargestellten Position neben der Planetengetriebeeinrichtung 4 mit vertikaler Orientierung der Schwenkachse 11 des Variators 3 anzuordnen. Somit werden auch bei der zweiten Variante des ersten Ausführungsbeispieles der Getriebevorrichtung 1 gemäß Fig. 1 auf das Joch 12 durch stoßartige Belastungen wirkende Stellkräfte und somit ein selbstständiges Verstellen des Variators 3 in konstruktiv einfacher und bauraumgünstiger Art und Weise vermieden.

Zusätzlich ist der Variator 3 bei der in Fig. 3 dargestellten Anordnung neben der Planetengetriebeeinrichtung 4 im Servicefall auf einfache Art und Weise demontierbar, da der Variator 3 lediglich von einer Steckverbindung abzuziehen und die Kegelradverzahnungen der Winkeltriebe 19, 20 durch Abheben aus dem Eingriff zu bringen sind.

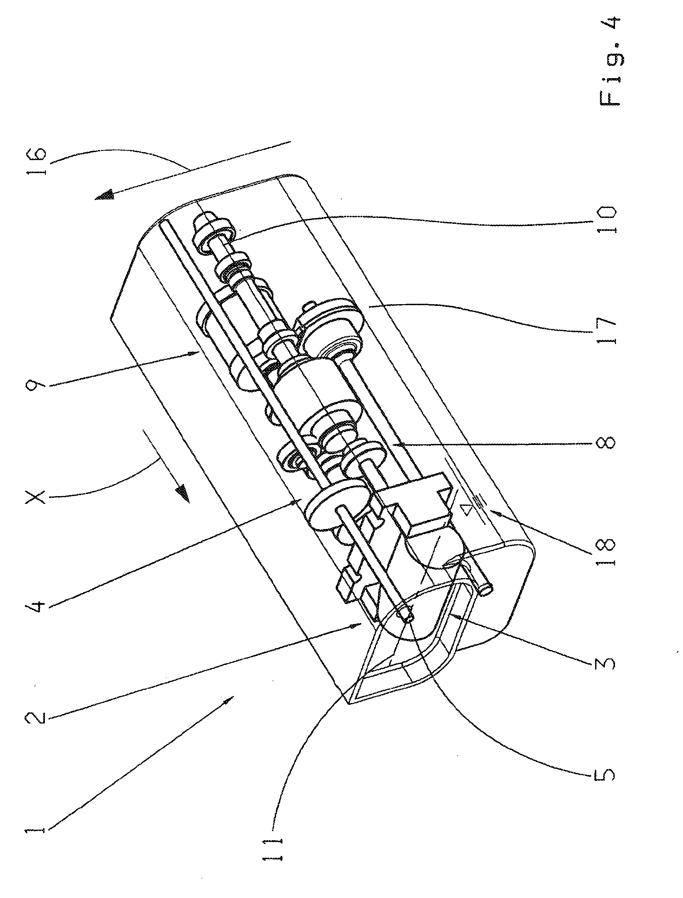

In Fig. 4 ist eine dritte Variante der Getriebevorrichtung 1 gemäß Fig. 1 dargestellt, bei welcher der länger als breit und tief ausgeführte Variator 3 in seiner Längserstreckung in Einbaulage im Fahrzeug wenigstens annähernd horizontal orientiert und oberhalb des Ölstandes 18 angeordnet ist, um eine möglichst einfache Demontierbarkeit des Variators 3 im Servicefall zu ermöglichen und das Eintauchen drehender Bauteile des Variators 3 in den Ölsumpf der Getriebevorrichtung 1 unterhalb des Ölstandes 18 zu vermeiden. Durch die Anordnung des Variators 3 oberhalb des Ölstandes 18 werden auf einfache Art und Weise Schleppverluste bzw. durch Ölplanschen verursachte Leistungsverluste ohne aufwendige Schottungsmaßnahmen für den Variator 3 vermieden.

Der Variator 3 ist ebenfalls in Vorwärtsfahrtrichtung X des Fahrzeuges, vor der Planetengetriebeeinrichtung 4 und der Schaltgetriebeeinrichtung 9 angeordnet. Die Getriebevorrichtung 1 gemäß Fig. 4 ist in radialer Richtung durch einen geringen Bauraumbedarf und durch eine größere axiale Länge gekennzeichnet. Zudem ist der Variator 3 aufgrund seiner in Vorwärtsfahrtrichtung X vordere Anordnung einfach zu demontieren, wobei der Variator 3 in Abhängigkeit der jeweiligen Ausführung des Fahrzeuges in Bezug auf eine Fahrzeugvorderachse nach vorne, in Bezug auf eine Fahrzeugoberseite nach unten oder in Richtung der Fahrzeughochachse 16 nach oben aus einem Fahrzeugrahmen 17 entnehmbar ist, der neben weiteren Fahrzeugkomponenten den für die Getriebevorrichtung 1 zur Verfügung stehenden Bauraum im Fahrzeug begrenzt.

Ist der Variator 3 zumindest bereichsweise unterhalb des Ölstandes 18 der Getriebevorrichtung 1 angeordnet, ist der Variator 3 durch geeignete Schotteinrichtungen von dem in dem nicht näher dargestellten Ölsumpf der Getriebevorrichtung 1 angeordneten Hydraulikfluid abzuschotten, um im Betrieb der Getriebevorrichtung 1 Planschverluste und eine Beeinträchtigung des Gesamtwirkungsgrades der Getriebevorrichtung 1 auf einfache Art und Weise zu vermeiden.

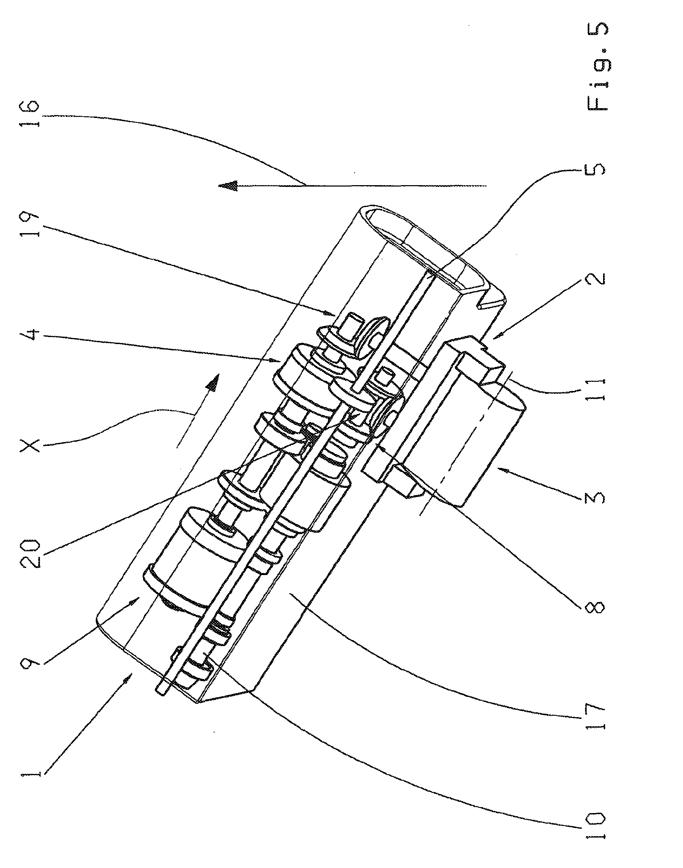

Die Anbindung des Variators 3 über die beiden Winkeltriebe 19 und 20 an die Planetengetriebeeinrichtung 4 bietet auf einfache Art und Weise die Möglichkeit, den Variator 3 in der in Fig. 5 dargestellten Position neben der Planetengetriebeeinrichtung 4 mit horizontaler Orientierung des Variators 3 anzuordnen und die Getriebevorrichtung 1 mit einer im Vergleich zu der Anordnung des Variators 3 gemäß Fig. 4 mit geringerer axialer Länge auszuführen. Zusätzlich ist der Variator 3 bei der vierten Variante der Getriebevorrichtung 1 gemäß Fig. 5 während einer Demontage mit geringem Aufwand von einer Fahrzeugseite ausgehend aus einer Steckverbindung und den Kegelradverzahnungen der Winkeltriebe 19 und 20 abziehbar ohne zuvor weitere Fahrzeugkomponenten demontieren zu müssen.

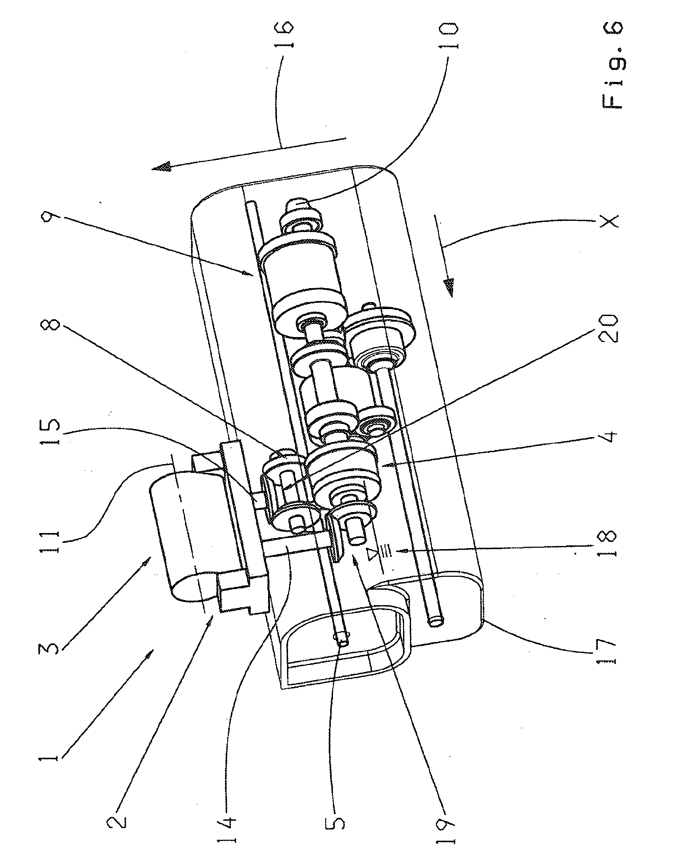

Bei der in Fig. 6 dargestellten fünften Variante des ersten Ausführungsbeispieles der Getriebevorrichtung 1 gemäß Fig. 1, bei der der Variator 3 oberhalb der Planetengetriebeeinrichtung 4 angeordnet ist, wird das Eintauchen drehender Bauteile des Variators 3 in den Ölsumpf der Getriebevorrichtung 1 bei gleichzeitig minimalem axialen Bauraumbedarf und bei zusätzlich seitlicher Begrenzung des für die Getriebevorrichtung 1 zur Verfügung stehenden Bauraumes durch eine definierte Rahmenbauweise des Fahrzeugrahmens 17 vollständig vermieden.

Darüber hinaus sind bei der Ausführung der Getriebevorrichtung 1 gemäß Fig. 6 Ölströme aus dem Variator 3, welche aus Leckagen, einem Spülölvolumenstrom und dergleichen resultieren, zur Schmierung von in Bezug auf die Fahrzeughochachse 16 unterhalb des Variators 3 angeordneten Getriebekomponenten verwendbar. Zusätzlich ist der Variator 3 bei entsprechender Anordnung der Getriebevorrichtung 1 im Fahrzeugrahmen 17 durch Kippen der oberhalb des Variators 3 angeordneten Fahrerkabine auf einfache Art und Weise in Bezug auf die Fahrzeughochachse 16 nach oben zu Servicezwecken entnehmbar.

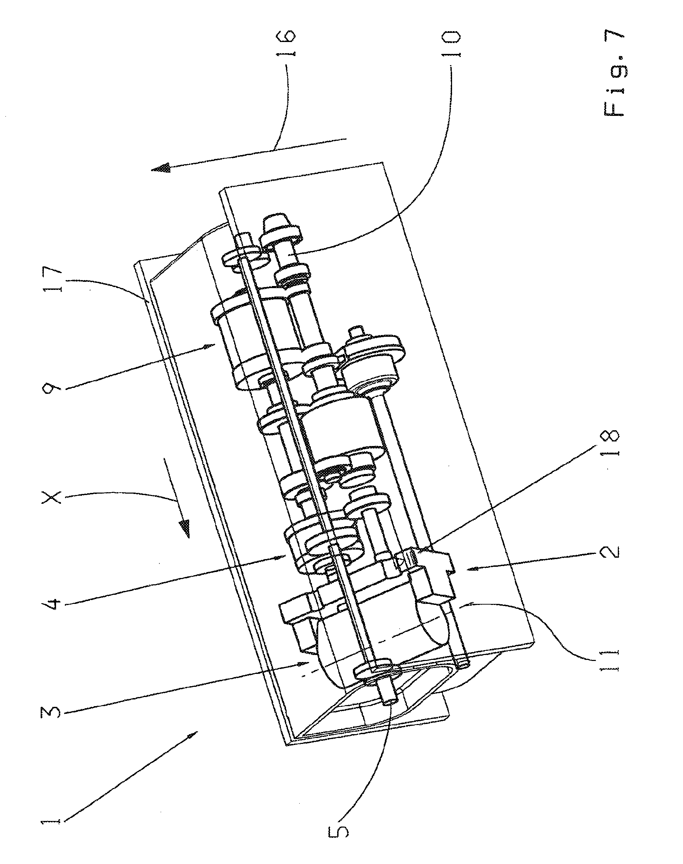

Die in Fig. 7 sechste Variante der Getriebevorrichtung 1 gemäß Fig. 1 ist ebenfalls mit einem Variator 3 ausgebildet, der länger als breit und tief ausgeführt ist. In seiner Längserstreckung ist der Variator 3 in der in Fig. 7 dargestellten Einbaulage im Fahrzeug wenigstens annähernd diagonal im Fahrzeugrahmen 17 angeordnet. Damit wird der vorliegend durch die Bauweise des Fahrzeugrahmens 17 seitlich begrenzte und zur Verfügung stehende Bauraum des zusätzlich nach oben und unten durch Fahrzeugaufbauten bzw. eine gewünschte Bodenfreiheit für den Einbau des Variators 3 bzw. der Getriebevorrichtung 1 zu Verfügung steht, vollständig ausgenutzt.

Darüber hinaus ist der Variator 3 in Vorwärtsfahrt Richtung X des Fahrzeuges vor der Planetengetriebeeinrichtung 4 und der Schaltgetriebeeinrichtung 9 angeordnet und in vorbeschriebener Art und Weise einfach demontierbar. Des Weiteren ist der Variator zumindest bereichsweise unterhalb des Ölstandes 18 der Getriebevorrichtung 1 angeordnet und durch geeignete Schotteinrichtungen von dem im Ölsumpf der Getriebevorrichtung 1 angeordneten Hydraulikfluid abgeschottet, um Planschverluste und eine Beeinträchtigung des Gesamtwirkungsgrades der Getriebevorrichtung 1 zu vermeiden.

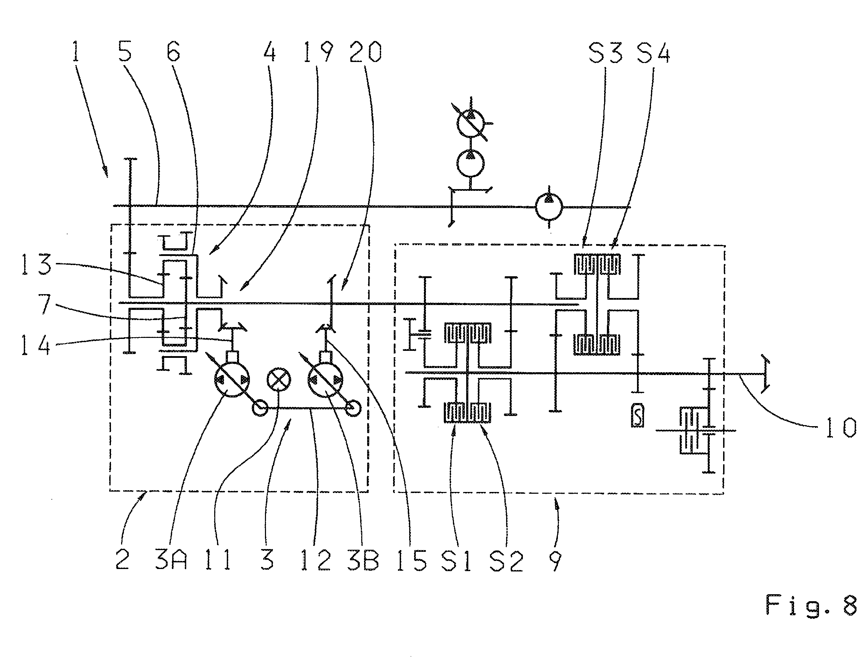

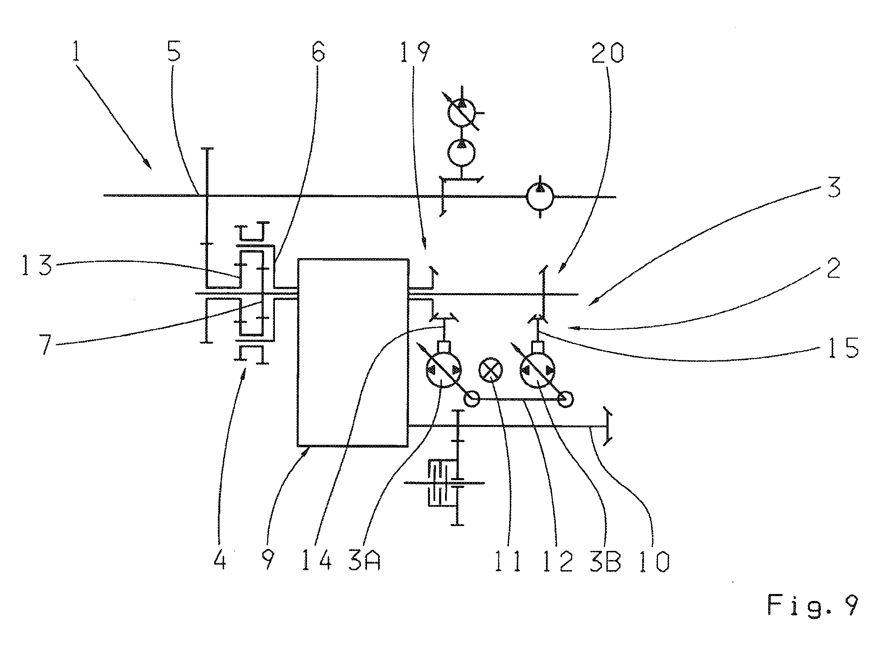

Falls im Bereich des Getriebeeingangs der zur Verfügung stehende Bauraumbedarf für den Variator 3 nicht ausreichend ist, ist der Variator 3 in der in Fig. 8 dargestellten Art und Weise räumlich zwischen der Planetengetriebeeinrichtung 4 und der Schaltgetriebeeinrichtung 9 anordenbar oder in der in Fig. 9 dargestellten Art und Weise in Vorwärtsfahrtrichtung X räumlich hinter der Schaltgetriebeeinrichtung 9 positionierbar, so dass die Schaltgetriebeeinrichtung 9 zwischen der Planetengetriebeeinrichtung 4 und dem Variator 3 angeordnet ist und die Getriebevorrichtung 1 in Bezug auf eine Fahrzeugvorderachse in einem hinteren Bereich einen größeren radialen Bauraumbedarf aufweist.

Grundsätzlich ist die leistungsverzweigte Getriebevorrichtung anstatt mit einem als Hydrostateinrichtung ausgeführten Variator auch mit anderen geeigneten Variatoren, wie beispielsweise einem Umschlingungsvariator, einem Reibradvariator oder dergleichen ausführbar, um die Übersetzung der Getriebevorrichtung in gewünschtem Umfang stufenlos und betriebszustandsabhängig variieren zu können.

### Bezugszeichen

- 1: Getriebevorrichtung
- 2: stufenloser Antriebssatz
- 3: Variator
- 3A: Pumpeneinrichtung
- 3B: Motoreinrichtung
- 4: Planetengetriebeeinrichtung
- 5: Getriebeantriebswelle
- 6: Welle, Planetenträger
- 7: Welle, Sonnenrad
- 8: Stirnradverzahnung
- 9: Schaltgetriebeeinrichtung
- 10: Getriebeabtriebswelle
- 11: Schwenkachse
- 12: Joch
- 13: zweites Sonnenrad
- 14, 15: Variatorwelle
- 16: Fahrzeughochachse
- 17: Fahrzeugrahmen
- 18: Ölstand
- 19, 20: Winkeltrieb
- S1 bis S4: Schaltelement
- X: Vorwärtsfahrtrichtung

## Patentansprüche

1. Getriebevorrichtung (1) für ein Fahrzeug mit einem Variator (3), einer Planetengetriebeeinrichtung (4) und einer Schaltgetriebeeinrichtung (9), wobei der Variator (3) im Bereich einer ersten Welle (14) und im Bereich einer zweiten Welle (15) mit der Planetengetriebeeinrichtung (4) und der Schaltgetriebeeinrichtung (9) wirkverbunden ist, und wobei der Variator (3) im Bereich seiner ersten Welle (14) und im Bereich seiner zweiten Welle (15) jeweils mit einer Welle (6, 7) der Planetengetriebeeinrichtung (4) verbunden ist, **dadurch gekennzeichnet, dass** die erste Welle (14) des Variators (3) über einen Winkeltrieb (19) nur mit einer der Wellen (6) der Planetengetriebeeinrichtung (4) und die zweite Welle (15) des Variators (3) über einen weiteren Winkeltrieb (20) nur mit einer weiteren Welle (13) der Planetengetriebeeinrichtung (4) gekoppelt ist und der Variator (3) zur Demontage von einer Steckverbindung und von Kegelradverzahnungen der Winkeltriebe (19, 20) abziehbar ausgeführt ist.

2. Getriebevorrichtung nach Anspruch 1, **dadurch gekennzeichnet, dass** der Variator (3) länger als breit und tief ist und in seiner Längserstreckung in Einbaulage im Fahrzeug wenigstens annähernd horizontal orientiert ist.

3. Getriebevorrichtung nach Anspruch 1, **dadurch gekennzeichnet, dass** der Variator (3) länger als breit und tief ist und in seiner Längserstreckung in Einbaulage im Fahrzeug in Bezug auf eine Fahrzeughochachse (16) wenigstens annähernd diagonal ausgerichtet ist.

4. Getriebevorrichtung nach Anspruch 1, **dadurch gekennzeichnet, dass** der Variator (3) länger als breit und tief ist und in seiner Längserstreckung in Einbaulage im Fahrzeug wenigstens annähernd vertikal ausgerichtet ist.

5. Getriebevorrichtung nach einem der Ansprüche 1 bis 4, **dadurch gekennzeichnet, dass** der Variator (3) wenigstens bereichsweise unterhalb eines Ölstandes (18) eines Ölsumpfes angeordnet und der unterhalb des Ölstandes (18) liegende Bereich durch Schotteinrichtungen vom Hydraulikfluid abgeschottet ist.

6. Getriebevorrichtung nach einem der Ansprüche 1 bis 4, **dadurch gekennzeichnet, dass** der Variator (3) oberhalb eines Ölstandes (18) eines Ölsumpfes angeordnet ist.

7. Getriebevorrichtung nach einem der Ansprüche 1 bis 6, **dadurch gekennzeichnet, dass** der Variator (3) als Hydrostateinrichtung in Schrägachsenbauweise ausgeführt und mit wenigstens einer Verstelleinheit (3A, 3B) ausgebildet ist.

8. Getriebevorrichtung nach einem der Ansprüche 1 bis 6, **dadurch gekennzeichnet, dass** der Variator als Hydrostateinrichtung in Schrägscheibenbauweise ausgeführt und mit wenigstens einer Verstelleinheit ausgebildet ist.

9. Getriebevorrichtung nach einem der Ansprüche 1 bis 8, **dadurch gekennzeichnet, dass** die Hydrostateinrichtung wenigstens eine Konstanteinheit umfasst.

10. Getriebevorrichtung nach einem der Ansprüche 1 bis 8, **dadurch gekennzeichnet, dass** die Hydrostateinrichtung wenigstens eine verstellbare Pumpeneinrichtung und mindestens eine verstellbare Motoreinrichtung aufweist, die unabhängig voneinander verstellbar ausgeführt sind.

11. Getriebevorrichtung nach einem der Ansprüche 1 bis 8, **dadurch gekennzeichnet, dass** die Hydrostateinrichtung wenigstens eine verstellbare Pumpeneinrichtung (3A) und mindestens eine verstellbare Motoreinrichtung (3B) aufweist, die gemeinsam verstellbar ausgeführt sind.

12. Getriebevorrichtung nach einem der Ansprüche 1 bis 11, **dadurch gekennzeichnet, dass** der Variator (3) räumlich zwischen der Planentengetriebeeinrichtung (4) und der Schaltgetriebeeinrichtung (9) angeordnet ist.

13. Getriebevorrichtung nach einem der Ansprüche 1 bis 11, **dadurch gekennzeichnet, dass** die Schaltgetriebeeinrichtung (9) räumlich zwischen der Planetengetriebeeinrichtung (4) und dem Variator (3) angeordnet ist.

14. Getriebevorrichtung nach einem der Ansprüche 1 bis 11, **dadurch gekennzeichnet, dass** der Variator (3) in Einbaulage in Bezug auf eine Fahrtrichtung des Fahrzeuges räumlich neben der Planetengetriebeeinrichtung (4) und/oder der Schaltgetriebeeinrichtung (9) angeordnet ist.

## Claims

1. Transmission device (1) for a vehicle, comprising a variator (3), a planetary gear unit (4) and a shift-gear unit (9), the variator (3) being operatively connected to the planetary gear unit (4) and to the shift-gear unit (9) in the region of a first shaft (14) and in the region of a second shaft (15), the variator (3) being connected, in the region of its first shaft (14) and in the region of its second shaft (15), in each case to a shaft (6, 7) of the planetary gear unit (4), **characterized in that** the first shaft (14) of the variator (3) is coupled via a V-drive (19) only to one of the shafts (6) of the planetary gear unit (4) and the second shaft (15) of the variator (3) is coupled via a further V-drive (20) only to a further shaft (13) of the planetary gear unit (4), and, for demounting purposes, the variator (3) is designed to be capable of being drawn off from a plug connection and from bevel-wheel toothings of the V-drive (19, 20).

2. Transmission device according to Claim 1, **characterized in that** the variator (3) is longer than it is wide and deep and is oriented at least approximately horizontally in its longitudinal extent in the installation position in the vehicle.

3. Transmission device according to Claim 1, **characterized in that** the variator (3) is longer than it is wide and deep and is oriented at least approximately diagonally in its longitudinal extent with respect to a vehicle vertical axis in the installation position in the vehicle (16).

4. Transmission device according to Claim 1, **characterized in that** the variator (3) is longer than it is wide and deep and is oriented at least approximately vertically in its longitudinal extent in the installation position in the vehicle.

5. Transmission device according to one of Claims 1 to 4, **characterized in that** the variator (3) is arranged, at least in regions, below an oil level (18) of an oil sump, and the region lying below the oil level (18) is partitioned off from the hydraulic fluid by means of partitioning devices.

6. Transmission device according to one of Claims 1 to 4, **characterized in that** the variator (3) is arranged above an oil level (18) of an oil sump.

7. Transmission device according to one of Claims 1 to 6, **characterized in that** the variator (3) is designed as a hydrostatic unit in an oblique-axis type of construction and is formed with at least one adjustment unit (3A, 3B).

8. Transmission device according to one of Claims 1 to 6, **characterized in that** the variator is designed as a hydrostatic unit in a swash plate type construction and is formed with at least one adjustment unit.

9. Transmission device according to one of Claims 1 to 8, **characterized in that** the hydrostatic unit comprises at least one fixed-displacement unit.

10. Transmission device according to one of Claims 1 to 8, **characterized in that** the hydrostatic unit has at least one adjustable pump unit and at least one adjustable motor unit which are designed to be adjustable independent of one another.

11. Transmission device according to one of Claims 1 to 8, **characterized in that** the hydrostatic unit has at least one adjustable pump unit (3A) and at least one adjustable motor unit (3B) which are designed to be jointly adjustable.

12. Transmission device according to one of Claims 1 to 11, **characterized in that** the variator (3) is arranged spatially between the planetary gear unit (4) and the shift-gear unit (9).

13. Transmission device according to one of Claims 1 to 11, **characterized in that** the shift-gear unit (9) is arranged spatially between the planetary gear unit (4) and the variator (3).

14. Transmission device according to one of Claims 1 to 11, **characterized in that**, in the installation position, the variator (3) is arranged spatially next to the planetary gear unit (4) and/or to the shift-gear unit (9) with respect to a direction of travel of the vehicle.

## Revendications

1. Dispositif de transmission (1) pour un véhicule comprenant un variateur (3), un système de transmission planétaire (4) et un système de transmission à changement de vitesse (9), le variateur (3) étant en liaison fonctionnelle avec le système de transmission planétaire (4) et le système de transmission à changement de vitesse (9) dans la région d'un premier arbre (14) et dans la région d'un deuxième arbre (15), et le variateur (3) étant relié respectivement à un arbre (6, 7) du système de transmission planétaire (4) dans la région de son premier arbre (14) et dans la région de son deuxième arbre (15), **caractérisé en ce que** le premier arbre (14) du variateur (3) n'est accouplé qu'avec l'un des arbres (6) du système de transmission planétaire (4) par le biais d'une transmission angulaire (19) et le deuxième arbre (15) du variateur (3) n'est accouplé qu'à un arbre supplémentaire (13) du système de transmission planétaire (4) par le biais d'une transmission angulaire supplémentaire (20), et le variateur (3) est réalisé de manière à pouvoir être retiré d'une liaison par emboîtement et de dentures coniques des transmissions angulaires (19, 20) en vue du démontage.

2. Dispositif de transmission selon la revendication 1, **caractérisé en ce que** le variateur (3) est plus long que large et que profond et est orienté de manière à ce que son étendue longitudinale dans la position d'installation dans le véhicule soit au moins approximativement horizontale.

3. Dispositif de transmission selon la revendication 1, **caractérisé en ce que** le variateur (3) est plus long que large et que profond et est aligné de manière à ce que son étendue longitudinale dans la position d'installation dans le véhicule soit au moins approximativement en diagonale par rapport à un axe vertical du véhicule (16).

4. Dispositif de transmission selon la revendication 1, **caractérisé en ce que** le variateur (3) est plus long que large et que profond et est aligné de manière à ce que son étendue longitudinale dans la position d'installation dans le véhicule soit au moins approximativement verticale.

5. Dispositif de transmission selon l'une quelconque des revendications 1 à 4, **caractérisé en ce que** le variateur (3) est disposé au moins dans certaines régions en dessous d'un niveau d'huile (18) d'un carter d'huile et la région située en dessous du niveau d'huile (18) est isolée du fluide hydraulique au moyen de dispositifs de cloisonnement.

6. Dispositif de transmission selon l'une quelconque des revendications 1 à 4, **caractérisé en ce que** le variateur (3) est disposé au-dessus d'un niveau d'huile (18) d'un carter d'huile.

7. Dispositif de transmission selon l'une quelconque des revendications 1 à 6, **caractérisé en ce que** le variateur (3) est réalisé sous forme de système hydrostatique de construction à axe oblique et est réalisé avec au moins une unité de réglage (3A, 3B).

8. Dispositif de transmission selon l'une quelconque des revendications 1 à 6, **caractérisé en ce que** le variateur est réalisé sous forme de système hydrostatique à construction à disque oblique et est réalisé avec au moins une unité de réglage.

9. Dispositif de transmission selon l'une quelconque des revendications 1 à 8, **caractérisé en ce que** le système hydrostatique comporte au moins une unité constante.

10. Dispositif de transmission selon l'une quelconque des revendications 1 à 8, **caractérisé en ce que** le système hydrostatique comprend au moins un système de pompe réglable et au moins un système de moteur réglable qui sont réalisés de manière à pouvoir être réglés indépendamment l'un de l'autre.

11. Dispositif de transmission selon l'une quelconque des revendications 1 à 8, **caractérisé en ce que** le système hydrostatique comprend au moins un système de pompe réglable (3A) et au moins un système de moteur réglable (3B) qui sont réalisés de manière à pouvoir être réglés en commun.

12. Dispositif de transmission selon l'une quelconque des revendications 1 à 11, **caractérisé en ce que** le variateur (3) est disposé spatialement entre le système de transmission planétaire (4) et le système de transmission à changement de vitesse (9).

13. Dispositif de transmission selon l'une quelconque des revendications 1 à 11, **caractérisé en ce que** le système de transmission à changement de vitesse (9) est disposé spatialement entre le système de transmission planétaire (4) et le variateur (3).

14. Dispositif de transmission selon l'une quelconque des revendications 1 à 11, **caractérisé en ce que**, dans la position d'installation, le variateur (3) est disposé, par rapport à une direction de conduite du véhicule, spatialement près du système de transmission planétaire (4) et/ou du système de transmission à changement de vitesse (9).
